Europäisches Patentamt

European Patent Office

Office européen des brevets

(19)

(11) Veröffentlichungsnummer: **0 171 639**
B1

(12) # EUROPÄISCHE PATENTSCHRIFT

(45) Veröffentlichungstag der Patentschrift:
11.10.89

(51) Int. Cl.⁴: $G 01 L 23/22$

(21) Anmeldenummer: 85108975.5

(22) Anmeldetag: 18.07.85

(54) Vorrichtung zur Auswertung von Klopfsignalen.

(30) Priorität: 16.08.84 DE 3430000

(43) Veröffentlichungstag der Anmeldung:
19.02.86 Patentblatt 86/08

(45) Bekanntmachung des Hinweises auf die Patenterteilung: 11.10.89 Patentblatt 89/41

(84) Benannte Vertragsstaaten:
DE FR GB SE

(56) Entgegenhaltungen:
EP-A- 0 102 779
DE-A- 3 020 853
DE-A- 3 026 097
DE-A- 3 031 511
DE-A- 3 133 703
GB-A- 2 065 226
US-A- 3 324 711

(73) Patentinhaber: ROBERT BOSCH GMBH
Postfach 50
D-7000 Stuttgart 1 (DE)

(72) Erfinder: Dreyer, Adolf
Theodor-Heuss-Strasse 12
D-7141 Oberriexingen (DE)
Erfinder: Roozenbeek, Herman
Breslauer Strasse 51
D-7141 Schwieberdingen (DE)

## Beschreibung

Die Erfindung betrifft Vorrichtungen zur Auswertung von Klopfsignalen nach dem unabhängigen Ansprüchen 1, 3, 4.

Aus der DE-A1-33 42 466 (veröffentlicht am 5.06.1985) ist eine Vorrichtung zur Erkennung von klopfenden Verbrennungen bekannt, bei der eine Vergleichseinrichtung und ein Klopffilter vorgesehen sind. Das Kopffilter ist dabei an einen Eigang der Vergleichseinrichtung angeschlossen, der andere Eigang der Vergleichseinrichtung führt ein Referenzpotential. Übersteigt das Ausgangssignal des Klopffilters das Referenzpotential, so wird am Ausgang der Vergleichseinrichtung ein Impuls abgegeben, der zur Klopferkennung herangezogen wird.

Das Klopffilter ist im allgemeinen als ein Bandpaß ausgebildet, dessen Mittenfrequenz auf die Mittenfrequenz eines zu erwartenden Klopfsignales abgestimmt ist. Im Ausgangssignal eines Klopfensors sind jedoch immer Grundgeräuschanteile und statistisch verteilte Störungen enthalten, die vom Betrieb der brennkraftmaschine herrühren.

Wird das Referenzpotential aus diesem Grundgeräusch gewonnen, wie es aus vielen Versionen von Klopferkennungen als Stand der Technik benannt ist, so können diese statistisch verteilten Störungen ebenfalls zu einer Überschreitung der Vergleichsschwelle der Vergleichseinrichtung führen und so fälschlicherweise zu einer Klopferkennung beitragen. Dies gilt in gleicher Weise für Klopferkennungsschaltungen mit geregelter Eingangsverstärkung, bei denen im allgemeinen das Referenzpotential auf ein festes Ruhepotential gelegt ist.

Aus der EP-A2-102 779 ist eine Vorrichtung bzw. ein Verfahren zur Klopferkennung bekannt, in der zwei Signale, die von Vibrationen der Maschine und vom Zylinderdruck abhängig sind, miteinander verglichen werden. Aus der Korrelation zwischen Zylinderdruckschwankungen und Vibrationen der Maschine wird das Auftreten von Klopfen erkannt. In diesem Zusammenhang wird die Verwendung einer rechnerischen Auto- oder Kreuzkorrelation zum Vergleich der Signale angedeutet.

### Vorteile der Erfindung

Besonders vorteilhaft aufgrund der einfachen Schaltungsstruktur und damit kostengünstigen Realisierung ist die erfindungsgemäße Vorrichtung nach der Gattung des Anspruches 1. Doch ergeben sich mit den Merkmalen des Anspruches 3 oder des Anspruches 4 auch vorteilhafte Lösungen. Sie haben gegenüber dem Stand der Technik den Vorteil, daß durch den Eingsatz eines Korrelationsfilters statische Störungen ausgeblendet werden. Erste und einzelne eintreffenden Impulse werden ebenfalls unterdrückt. Hierdurch ist eine sichere Klopferkennung auch bei extremen Signal-Rausch-Verhältnissen möglich. Dadurch können Klopfsignale erkannt werden, deren Pegel innerhalb des Rauschpegels liegt. Bei einer vorgegebenen Erkennungssicherheit kann hierdurch die Vergleichschwelle der Vergleichseinrichtung herabgesetzt werden. Dies ermöglicht die sichere Erkennung von Klopfsignalen noch geringerer Intensität, was sich auf eine weitere Verfeinerung einer Klopfregelung günstig auswirkt. Durch Realisierung des Korrelationsfilters in einem Mikrocomputer kann der Schaltungsaufwand stark verringert werden.

### Zeichnung

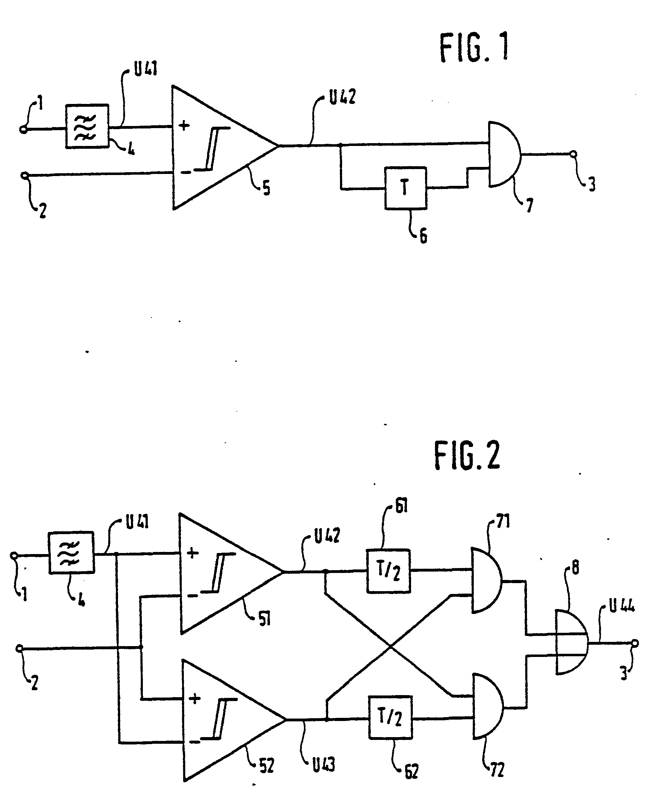

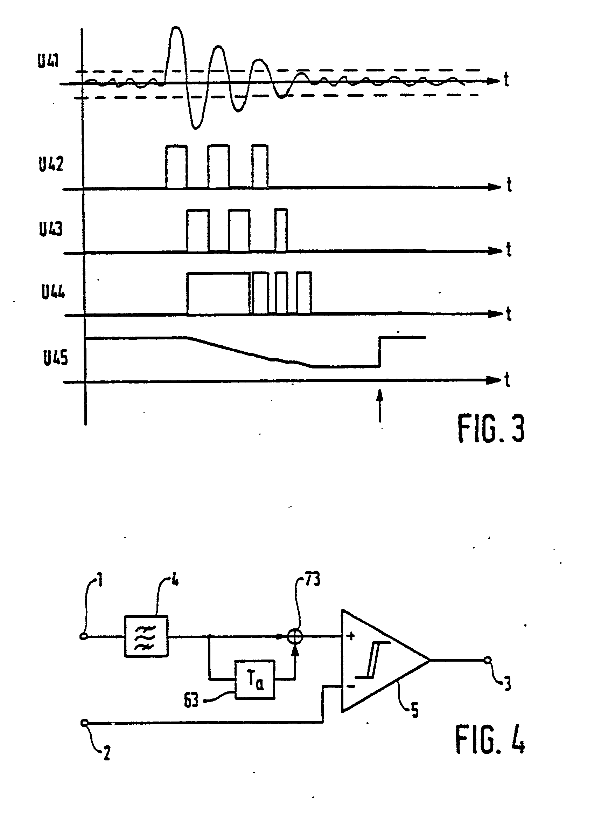

Drei Ausführungsbeispiele der Erfindung sind in der Zeichnung dargestellt und in der nachfolgenden Beschreibung näher erläutert. Figur 1 und Figur 4 zeigen eine Vorrichtung zur Auswertung von Klopfsignalen mit einem Korrelationsfilter, Figur 2 zeigt eine Vorrichtung zur Auswertung von Klopfsignalen mit einem Kreuzkorrelationsfilter und Figur 3 ein Signaldiagramm zur Erläuterung der Wirkungsweise.

### Beschreibung der Ausführungsbeispiele

In Figur 1 ist an einer Klemme 1 ein Klopffilter 4 angeschlossen, das mit dem Plus-Eingang eines Vergleichers 5 verbunden ist. Der Minus-Eingang ist mit einer Referenzpotentialklemme 2 verbunden. Der Ausgang des Vergleichers 5 führt auf ein Totzeitglied 6 und einen Eingang eines UND-Gliedes 7, dessen anderer Eingang an den Ausgang des Totzeitgliedes 6 angeschlossen ist. Der Ausgang des UND-Gliedes 7 führt an eine Ausgangsklemme 3.

Das Klopffilter 4 ist als ein Bandpaß ausgebildet, dessen Durchgangsbereich auf den Frequenzgang eines zu erwartenden Klopfsignales angepaßt ist. Es kann sich jedoch auch um ein Filternetzwerk handeln, das in mehreren Stufen an einen hier nicht näher dargestellten Klopfsensor angeschlossen ist.

An der Referenzpotentialklemme 2 liegt ein Referenzpotential an, das schwankend proportional zum Hintergrundgeräusch der laufenden Brennkraftmaschine ausgebildet sein kann z. B. durch Gleichrichtung und Mittelung des Hintergrundgeräusches. Bei einer Klopferkennung mit geregelter Eingangsverstärkung kann das Referenzpotential auch ein festes Ruhepotential sein.

Der Vergleicher 5 ist mit einer Hysterese und einer Vorzugslage ausgestattet, d. h., er verhält sich wie ein Schmitt-Trigger, dessen Ausgang eindeutig auf Null oder Eins liegt, wenn keine Signale an seinen Eingängen anliegen.

Erscheinen am Ausgang des Klopffilters 4 Signale, die vom Klopfsensor herrühren, und gleichzeitig die Vergleichsschwelle überschreiten, so liegen am Ausgang des Vergleichers 5 Impulse an. In Figur 3 zeigt die oberste Darstellung einen Verlauf einer Spannung U41 am Ausgang des Klopffilters 4. Darunter ist eine Spannung U42 aufgetragen, die Impulse am Ausgang des Vergleichers 5 darstellt. Diese Impulse oder Klopfanregungen schwingen dabei hauptsächlich auf einer Frequenz, die von den speziellen Motoreigenschaften, insbesondere von der Geometrie des Brennraumes abhängen. Es können jedoch auch einzelne statistische Störungen zu einer Überschreitung der Triggerschwelle des Vergleichers 5 führen, so daß sich einzelne Impulse als Spannung U42 ergeben.

Das Totzeitglied 6 und das UND-Glied 7 stellen zusammen ein Korrelationsfilter dar. Dieses Korrelationsfilter hat das Spektrum eines Kammfilters, dessen Grundfrequenz auf die Mittenfrequenz eines zu erwartenden Klopfsignales abgestimmt ist. Derartige Filterstrukturen sind bereits als Transversalfilter mit konstanten Koeffizienten aus dem Stand der Technik bekannt. Im gewählten Ausführungsbeispiel ist das Korrelationsfilter vom Grad 1, es liegt aber im Bereich der Erfindung, auch Korrelationsfilter höheren Grades zu verwenden. Das Totzeitglied 6 kann dabei durch eine Kette von Monoflops oder durch getaktete Schieberegister gebildet werden. Die Zeitkonstante T des Totzeitgliedes ist dabei genau der Kehrwert der Mittenfrequenz eines zu erwartenden Klopfsignales.

Durch das UND-Glied 7 wird erreicht, daß an der Ausgangsklemme 3 nur dann ein Impuls erscheint, wenn am Ausgang des Totzeitgliedes 6 und am Ausgang des Vergleiches 5 gleichzeitig ein positiver Impuls anliegt. Bei einer pulsförmigen Ausgangsschwingung des Vergleichers 5 auf der Mittenfrequenz eines zu erwartenden Klopfsignales ergeben sich daher an der Ausgangsklemme 3 die gleichen Impulse, wobei der erste Schwingungszug ausgeblendet ist. Das gleiche gilt für ganzzahlige Vielfache dieser Frequenz, wobei bei der n-fachen Frequenz die n ersten Schwingungszüge ausgeblendet sind. Frequenzen, die genau zwischen den Kammfrequenzen des Korrelationsfilters liegen werden dagegen vollständig ausgeblendet. Einzelne und kurze Impulse werden vollständig unterdrückt.

Die gleiche Filterfunktion läßt sich auch erreichen, wenn diese digitale Signalverarbeitung in einem nachfolgenden Mikrocomputer durch Software vorgenommen wird. In diesem Fall wird das Ausgangssignal des Vergleichers 5 auf einen Interrupt-Eingang des Mikrocomputers gegeben, die Abfrage auf Klopferkennung erfolgt danach in Abständen T der Mittenfrequenz. Treffen zwei oder mehr Signale in zeitlichen Abständen T ein, so wird ein Klopferkennungssignal ausgegeben, bzw. eine Meldung innerhalb der Software veranlaßt.

Figur 2 zeigt ein zweites Ausführungsbeispiel der Erfindung mit zwei gleichen Vergleichern und einem Kreuzkorrelationsfilter. Hierfür ist der Ausgang des Klopffilters 4 mit dem Plus-Eingang eines ersten Vergleichers 51 und dem Minus-Eingang eines zweiten Vergleichers 52 verbunden. Der jeweilige andere Eingang liegt an der Referenzpotentialklemme 3. An den Ausgang jedes Vergleichers ist ein Korrelationsfilter 61, 71 bzw. 62, 72 angeschlossen. Der Unterschied gegenüber dem ersten Ausführungsbeispiel besteht darin, daß je ein Anschluß am ersten UND-Glied 71 und zweiten UND-Glied 72 kreuzweise mit dem anderen vertauscht ist. Die Ausgänge des ersten UND-Gliedes 71 und des zweiten UND-Gliedes 72 führen über ein ODER-Glied 8 an die Ausgangsklemme 3.

Der erste Vergleicher 51 bildet Ausgangsimpulse U42, wie bei dem ersten Ausführungsbeispiel, bei positivem Überschwingen gegenüber dem Referenzpotential. Der zweite Vergleicher 52 bildet ausgangsimpulse U43 bei negativem Überschwingen gegenüber dem Referenzpotential. Beide Vergleicher 51, 52 sind mit einer Hysterese ausgestattet und besitzen die gleiche Vorzugslage. Die Spannungen U42, U43 sind in der Figur 3 dargestellt.

Die Zeitkonstanten T/2 des ersten Totzeitgliedes 61 und des zweiten Totzeitgliedes 62 sind halb so groß wie der Kehrwert der Mittenfrequenz eines zu erwartenden Klopfsignales. Damit ergibt sich an der Ausgangsklemme 3 aus den Spannungen U42 und U43 eine Spannung U44, wie sie in Figur 3 dargestellt ist. Zur Klopfsignalerkennung kann diese Spannung U44 intergriert werden, wobei nach Überschreiten einer vorgegebenen Schwelle dieses Integrationssignales eine Klopferkennungssignal abgegeben wird. In Figur 3 ist eine solche Integrationsspannung U45 dargestellt, wobei am Ende eines kurbelwellensynchronen Meßfensters der Integrierer gelöscht wird. Eine mögliche Realisierung in einem Mikrorechner liegt dabei im handwerklichen Können eines Fachmannes und ist zur Vereinfachung der Darstellung nicht weiter gezeigt.

In diesem zweiten Ausführungsbeispiel wird eine kreuzweise Korrelation beider Halbwellensignale eines Klopfsignales erreicht, es können somit nur noch solche Klopfsignale zur Klopferkennung beitragen, bei denen in der Zeit T/2 eine Schwellwertüberschreitung im jeweils anderen Vergleicher vorausging. Somit erkennt die Schaltungsanordnung nur noch solche Klopffilterausgangssignale als Klopfen, die im Takte der Mittenfrequenzen von Klopfsignalen zu einer Schwellwertüberschreitung führen und dabei das Vorzeichen wechseln. Andere, in statistischer Folge eintreffende, Signale werden nicht als Klopfen erkannt. Dadurch ist eine sichere Klopferkennung auch bei extremem Signal-Rausch-Verhältnis möglich.

Ein drittes Ausführungsbeispiel ist in Figur 4 dargesstelt, das ein analoges Korrelationsfilter, bestehend aus einem Totzeitglied 63 und einem Summierer 73, zwischen ein Klopffilter 4 und einen Eingang eines Vergleichers 5 geschaltet aufweist. Struktur und Funktionsweise ist dabei ähnlich zum ersten Ausführungsbeispiel gemäß Figur 1. Das Totzeitglied kann etwa durch eine Eimerkettenschaltung für das abgetastete Ausgangssignal des Klopffilters 4 gebildet werden.

**Patentansprüche**

1. Vorrichtung zur Auswertung von Klopfsignalen bei einer Brennkraftmaschine mit einem einem Signaleingang nachgeschalteten Klopffilter (4), das an einen Eingang eines Vergleichers (5) angeschlossen ist, an dessen anderem Eingang ein Referenzpotential anliegt und der dann Impulse abgibt, wenn das Klopfsignal einen vorgegebenen Wert übersteigt, wobei an den Ausgang des Vergleichers ein Korrelationsfilter (6, 7) angeschlossen ist, dessen Grundfrequenz auf eine im Durchlaßbereich des Klopffilters (4) liegende Frequenz abgestimmt, ist und an dessen Ausgang bei Vorliegen von Klopfen ein Erkennungssignal abgegeben wird.

2. Vorrichtung nach Anspruch 1, dadurch gekennzeichnet, daß das Korrelationsfilter aus einem UND-Glied (7), das mit einem Eingang direkt an den Ausgang des Vergleichers geschaltet ist, und aus einem Totzeitglied (6) besteht, das zwischen den anderen Eingang des UND-Gliedes (7) und den Ausgang des Vergleichers (5) geschaltet ist.

3. Vorrichtung zur Auswertung von Klopfsignalen bei einer Brennkraftmaschine mit einem einem Signaleingang (1) nachgeschalteten Klopffilter (4) und einem Vergleicher (5), an dessen einem Eingang ein Referenzpotential anliegt, wobei zwischen den Ausgang des Klopffilters (4) und den anderen Eingang des Vergleichers (5) ein Korrelationsfilter (63, 73), dessen Grundfrequenz auf eine im Durchlaßbereich des Klopffilters (4) liegende Frequenz abgestimmt ist, geschaltet ist.

4. Vorrichtung zur Auswertung von Klopfsignalen bei einer Brennkraftmaschine mit zwei Vergleichern (51, 52) und mit einem einem Signaleingang (1) nachgeschalteten Klopffilter (4), das an jeweils einen Eingang der Vergleicher angeschlossen ist, wobei jeweils der andere Eingang der Vergleicher an ein Referenzpotential angeschlossen ist, und wobei der erste Vergleicher (51) zur Erkennung von Klopfsignalen oberhalb einer Vergleichsschwelle vorgesehen ist, der zweite Vergleicher (52) zur Erkennung von Klopfsignalen unterhalb einer Vergleichsschwelle vorgesehen ist, und an die Ausgänge der Vergleicher (51, 52) ein Kreuzkorrelationsfilter (61, 62, 71, 72, 8) angeschlossen ist, dessen Grundfrequenz auf das Doppelte einer im Durchlaßbereich des Klopffilters (4) liegenden Frequenz abgestimmt ist.

5. Vorrichtung nach Anspruch 4, dadurch gekennzeichnet, daß das Kreuzkorrelationsfilter aus einem ersten Totzeitglied (61), einem zweiten Totzeitglied (62), einem ersten UND-Glied (71), einem zweiten UND-Glied (72) und einem ODER-Glied (8) besteht, wobei an den Ausgang des ersten Vergleichers (51) das erste Totzeitglied (61) und ein Eingang des zweiten UND-Gliedes (71) angeschlossen ist, wobei an den Ausgang des zweiten Vergleichers (52) das zweite Totzeitglied (62) und ein Eingang des ersten UND-Gliedes (71) angeschlossen ist, wobei der Ausgang des ersten Totzeigliedes (61) an den anderen Eingang des ersten UND-Gliedes (71) angeschlossen ist, wobei der Ausgang des zweiten Totzeitgliedes (62) an den anderen Eingang des zweiten UND-Gliedes (72) angeschlossen ist, und wobei die Ausgänge des ersten UND-Gliedes (71) und des zweiten UND-Gliedes (72) an die Eingänge des ODER-Gliedes (8) angeschlossen sind.

6. Vorrichtung nach Anspruch 5, dadurch gekennzeichnet, daß das erste Totzeitglied (61) und das zweite Totzeitglied (62) eine Zeitkonstante besitzen, die dem Kehrwert der doppelten Grundfrequenz entspricht.

7. Vorrichtung nach einem der Ansprüche 1, 3, 4, dadurch gekennzeichnet, daß die Korrelationsfilter in einem Mikrorechner realisiert sind, wobei die Totzeiten des Totzeitgliedes oder der Totzeitglieder durch Abfragen in der grundfrequenz oder der doppelten Grundfrequenz gebildet werden.

8. Vorrichtung nach einem der vorhergehenden Ansprüche, dadurch gekennzeichnet, daß der oder die Vergleicher eine Hysterese aufweisen.

9. Vorrichtung nach Anspruch 8, dadurch gekennzeichnet, daß der oder die Vergleicher die gleiche Vorzugslage besitzen.

**Claims**

1. Device for evaluating knock signals in an internal combustion engine comprising a knock filter (4) which follows a signal input (1) and which is connected to an input of a comparator (5) at the other input of which a reference potential is present and which emits pulses when the knock signal exceeds a predetermined value, characterized in that a correlation filter (6, 7), the fundamental frequency of which is tuned to a frequency lying within the pass range of the knock filter (4) and at the output of which a detection signal is emitted if knocking is present, is connected to the output of the comparator.

2. Device according to Claim 1, characterized in that the correlation filter consists of an AND gate (7) which is connected with one input directly to the output of the comparator and of a lag element (6) which is connected between the other input of the AND gate (7) and the output of the comparator (5).

3. Device for evaluating knock signals in an internal combustion engine, comprising a knock filter (4) which follows a signal input (1), and a comparator (5) at one input of which a reference potential is present, characterized in that between the output of the knock filter (4) and the other input of the comparator (5), a correlation filter (63, 73) is connected, the fundamental frequency of which is tuned to a frequency lying within the pass range of the knock filter (4).

4. Device for evaluating knock signals in an internal combustion engine, comprising two comparators (51, 52) and comprising a knock filter (4) which follows a signal input (1) and which is connected to one input of the comparators in each case, the other input of the comparators in each case being connected to a reference potential, characterized in that the first comparator (51) is provided for detecting knock signals above a reference threshold, the second comparator (52) is provided for detecting knock signals below a reference threshold, and the outputs of the comparators (51, 52) are connected to a cross-correlation filter (61, 62, 71, 72, 8) the fundamental frequency of which is tuned to twice the frequency of a frequency lying within the pass range of the knock filter (4).

5. Device according to Claim 4, characterized in that the cross-correlation filter consists of a first lag element (61) a second lag element (62) a first AND gate (71) a second AND gate (72) and an OR gate (8), the first lag element (61) and an input of the second AND gate (72) being connected to the output of the first comparator (51), the second lag element (62) and an input of the first AND gate (71) being connected to the output of the second comparator (52), the output of the first lag element (61) being connected to the other input of the first AND gate (71), the output of the second lag element (62) being connected to the other input of the second AND gate (72), and the outputs of the first AND gate (71) and of the second AND gate (72) being connected to the inputs of the OR gate (8).

6. Device according to Claim 5, characterized in that the first lag element (61) and the second lag element (62) have a time constant which corresponds to the inverse of twice the fundamental frequency.

7. Device according to one of Claims 1, 3, 4, characterized in that the correlation filters are implemented in a microcomputer, the lag times of the lag element or of the lag elements being formed by interrogation at the fundamental frequency or at twice the fundamental frequency.

8. Device according to one of the preceding claims, characterized in that the comparator or comparators exhibit a hysteresis.

9. Device according to Claim 8, characterized in that the comparator or comparators have the same preferred state.


**Revendications**

1. Dispositif pour l'exploitation de signaux de cliquetis dans un moteur à combustion interne, avec un filtre de cliquetis (4) branché à la suite d'une entrée de signaux (1) et qui est raccordé à une entrée d'un comparateur (5) à l'autre entrée duquel s'applique un potentiel de référence et qui délivre des impulsions lorsque le signal de cliquetis dépasse une valeur prédéfinie, un filtre de corrélation (6, 7) étant raccordé à la sortie du comparateur, la fréquence de base de ce filtre étant accordée à une fréquence se situant dans la bande de passage du filtre de cliquetis (4), tandis qu'à la sortie du filtre de corrélation, un signal d'identification est émis en présence de cliquetis.

2. Dispositif selon la revendication 1, caractérisé en ce que le filtre de corrélation est constitué par un organe ET (7) dont une entrée est branchée directement à la sortie du comparateur, et par un organe de temps de retard (6) qui est branché entre l'autre entrée de l'organe ET (7) et la sortie du comparateur (5).

3. Dispositif pour l'exploitation de signaux de cliquetis dans un moteur à combustion interne, avec un filtre de cliquetis (4) branché à la suite d'une entrée de signaux (1) et avec un comparateur (5) à l'une des entrées duquel s'applique un potentiel de référence, un filtre de corrélation (63, 73) étant branché entre la sortie du filtre de cliquetis (4) et l'autre entrée du comparateur (5), la fréquence de base de ce filtre de corrélation étant accordée à une fréquence se situant dans la bande de passage du filtre de cliquetis (4).

4. Dispositif pour l'exploitation de signaux de cliquetis dans un moteur à combustion interne, avec deux comparateurs (51, 52) et avec un filtre de cliquetis (4) branché à la suite d'une entrée de signaux (1), ce filtre de cliquetis étant respectivement raccordé à une entrée du comparateur, tandis que l'autre entrée de ce comparateur est reliée à un potentiel de référence, le premier comparateur (51) étant prévu pour identifier des signaux de cliquetis au-dessus d'un seuil de comparaison, le second comparateur (52) étant prévu pour identifier les signaux de cliquetis au-dessous d'un seuil de comparaison, tandis qu'aux sorties des comparateurs (51, 52) est raccordé un filtre de corrélation croisée (61, 62, 71, 72, 8) dont la fréquence de base est accordée au double d'une fréquence se situant dans la borne de passage du filtre de cliquetis (4).

5. Dispositif selon la revendication 4, caractérisé en ce que le filtre de corrélation croisée est constitué par un premier organe de temps de retard (61), par un second organe de temps de retard (62), par un premier organe ET (71), par un second organe ET (72) et par un organe OU (8), le premier organe de temps de retard (61) et une entrée du second organe ET (72) étant raccordés à la sortie du premier comparateur (51), tandis qu'à la sortie du second comparateur (52) sont raccordés le second organe de temps de retard (62) et une entrée du premier organe ET (71), la sortie du premier organe de temps de retard (61) étant raccordée à l'autre entrée du premier groupe ET (71), tandis que la sortie du second organe de temps de retard (62) est raccordée à l'autre entrée du second organe ET (72), et les sorties du premier organe ET (71) et du second organe ET (72) étant raccordées aux entrées de l'organe OU (8).

6. Dispositif selon la revendication 5, caractérisé en ce que le premier organe de temps de retard (61) et le second organe de temps de retard (62) ont une constante de temps qui correspond à la valeur inverse du double de la fréquence de base.

7. Dispositif selon une des revendications 1, 3, 4, caractérisé en ce que les filtres de corrélation sont réalisés dans un microcalculateur, les temps de retard de l'organe de temps de retard ou bien des organes de temps de retard, étant formés par interrogation dans la fréquence de base, ou bien le double de la fréquence de base.

8. Dispositif selon une des précédentes revendications, caractérisé en ce que le ou les comparateurs comportent une hystérésis.

9. Dispositif selon la revendication 8, caractérisé en ce que le ou les comparateurs ont la même position préférentielle.

# FIG.1

# FIG.2

FIG. 3

FIG. 4